# EUROPEAN PATENT APPLICATION

(11) **EP 4 629 363 A1**
(43) Date of publication of application: **08.10.2025**
(21) Application number: 24207252.8
(22) Date of filing: 17.10.2024
(51) Int. Cl.: H01M 10/04, H01M 10/0583, H01M 50/466

(54) **THERMALLY-COMPOSITING LAMINATED CELLS AND PREPARATION METHODS OF THERMALLY-COMPOSITING LAMINATED CELLS**

(30) Priority: 03.04.2024 CN 202420693462 U; 03.04.2024 CN 202410404575
(71) Applicant: Eve Power Co., Ltd., Jingmen, Hubei 448000 (CN)
(72) Inventor: YUAN, Dingding, Jingmen, Hubei, 448000 (CN); CHEN, Wei, Jingmen, Hubei, 448000 (CN); LI, Weibo, Jingmen, Hubei, 448000 (CN); CHEN, Liquan, Jingmen, Hubei, 448000 (CN); SU, Bin, Jingmen, Hubei, 448000 (CN); HE, Wei, Jingmen, Hubei, 448000 (CN); LIU, Jincheng, Jingmen, Hubei, 448000 (CN)
(74) Representative: Murgitroyd & Company

(57) **Abstract**

A thermally-compositing laminated cell and a preparation method of a thermally-compositing laminated cell are provided. The cell includes a plurality of first electrode plates (100), a plurality of second electrode plates (200) and a separator (300). The polarity of each of the first electrode plates (100) and the polarity of each of the second electrode plates (200) are opposite, and the separator (300) includes a plurality of body portions (310) and a plurality of bending portions (320) disposed alternately and continuously. Along a thickness direction of the first electrode plate (100), the first electrode plates (100) and the second electrode plates (200) are alternately stacked, adjacent first electrode plate (100) and second electrode plates (200) are separated by the body portion (310), and each of the bending portions (320) is provided with an incomplete-cut-off structure (330), and the separator (300) is folded at the incomplete-cut-off structure (330).

## Description

### TECHNICAL FIELD

The present disclosure belongs to the field of battery technology, and in particular, relates to thermally-compositing laminated cells and preparation methods of thermally-compositing laminated cells.

### BACKGROUND

At present, battery cells are mainly manufactured by folding or winding processes, and thermally-compositing laminated cells are widely used due to their many advantages. The electrode plates of the thermally-compositing laminated cell are in a free-falling state during the folding process, the negative electrode plates and the positive electrode plates in the thermally-compositing laminated cell are misaligned, resulting in poor alignment of the thermally-compositing laminated cell. During the battery charging process, lithium ions are deintercalated from the positive electrode plate and intercalated in the negative electrode plate, due to the misalignment of the positive electrode plate and the negative electrode plate, the lithium ions cannot be completely intercalated in the negative electrode plate. The lithium ions that cannot be intercalated in the negative electrode plate can only obtain electrons on the surface of the negative electrode plate, so that white metallic lithium element is formed, and thus lithium precipitation occurs. Lithium precipitation greatly shortens the cycle life of the battery, limits the fast charging capacity of the battery, and may also cause combustion and explosion, thereby posing safety risks and reducing battery performance.

In related technologies, in order to improve the alignment of the thermally-compositing laminated cell, a shaping process is added to the production process of the thermally-compositing laminated cell. After the thermal compositing units are folded in a free-falling manner to form the cell, a shaping cylinder is used to clamp the cell from both sides of the cell, so that the electrode plates in the cell are aligned. There is still a problem of poor alignment of the cell by relying on the shaping cylinder for cell shaping, and during the shaping process of the shaping cylinder, the powder of the electrode plate may be knocked off, which increases the risk of short circuiting of the cell pack.

### SUMMARY

Embodiments of the present disclosure provide a thermally-compositing laminated cell and a preparation method of a thermally-compositing laminated cell. By disposing an incomplete-cut-off structure on the bending portion of the separator in the thermally-compositing laminated cell, the separator is folded along the incomplete-cut-off structure, thereby realizing technical effects of good folding quality, high folding efficiency and good alignment.

In a first aspect, an embodiment of the present disclosure provides a thermally-compositing laminated cell including:
a plurality of first electrode plates;
a plurality of second electrode plates, a polarity of each of the first electrode plates and a polarity of each of the second electrode plates are opposite; and
a separator, the separator includes a plurality of body portions and a plurality of bending portions disposed alternately and continuously;
along a thickness direction of the first electrode plates, each of the first electrode plates and each of the second electrode plates are alternately stacked, one of the first electrode plates and one of the second electrode plates adjacent to each other are separated by one of the body portions, each of the bending portions is provided with an incomplete-cut-off structure, and the separator is folded at the incomplete-cut-off structure.

Optionally, the separator includes a first separator and a second separator, the first separator includes first body portions and first bending portions, the second separator includes second body portions and second bending portions, and each of the first bending portions is provided with the incomplete-cut-off structure and/or each of the second bending portions is provided with the incomplete-cut-off structure.

Optionally, each of the first bending portions and the second bending portions is provided with the incomplete-cut-off structure, and a projection of the-incomplete-cut-off structure of the first bending portion on the second separator overlaps the incomplete-cut-off structure of the second bending portion.

Optionally, each of the first bending portions and each of the second bending portions are connected in an attached manner.

Optionally, the incomplete-cut-off structure includes a plurality of through holes penetrating the separator, and the through holes are spaced apart along a width direction of the separator.

Optionally, a distance between any adjacent two of the through holes is the same; or
optionally, along the width direction of the separator, a distance between adjacent ones of the through holes is S1, wherein 5 mm≤S1 ≤20 mm; or
optionally, each of the through holes has a first dimension L1 and a second dimension W1, the first dimension is a distance between two parallel planes that virtually abut against hole walls at two sides of each of the through holes, and the second dimension is a distance between two parallel planes that virtually abut against hole walls at two ends of each of the through holes, wherein 1 mm≤L1≤20 mm, and/ or, 1 m≤W1≤2 mm; or
optionally, a shape of each of the through holes is a circle or a rectangle.

Optionally, each of the first electrode plates is a negative electrode plate or a positive electrode plate, and each of the second electrode plates is a positive electrode plate or a negative electrode plate.

Optionally, a dimension of a length side of the negative electrode plate is larger than a dimension of a length side of the positive electrode plate, and a dimension of a width side of the negative electrode plate is larger than a dimension of a width side of the positive electrode plate.

Optionally, a distance between the length side of the positive electrode plate and the length side of the negative electrode plate is S2, wherein 1 mm≤S2≤3 mm;

and/or, a distance between the width side of the positive electrode plate and the width side of the negative electrode plate is S3, wherein 1 mm≤S3≤3 mm; or

optionally, a dimension of a length side of each of the body portions is larger than the dimension of the length side of the negative electrode plate, and a dimension of a width side of each of the body portions is larger than the dimension of the width side of the negative electrode plate.

Optionally, a distance between the length side of the negative electrode plate and a length side of the separator is S4, wherein 2 mm≤S4≤ 4 mm;
and/or, the separator includes a starting end, and a distance between the starting end and a width side of one of negative electrode plates close to the starting end is S5, wherein 1 mm≤S5≤3 mm.

Optionally, the thermally-compositing laminated cell includes N first electrode plates and M second electrode plates, each of N and M is a positive integer greater than 1, in a case where each of the N first electrode plates is a negative electrode plate and each of the M second electrode plates is a positive electrode plate, and a difference between N and M is 1; and optionally, the separator includes a starting end and a terminate end, a first one of the N first electrode plates is closer to the starting end of the separator compared to a first one of the M second electrode plates, and a N-th one of the N first electrode plates is closer to the terminate end of the separator compared to a M-th one of the M second electrode plates.

Optionally, the thermally-compositing laminated cell includes N first electrode plates and M second electrode plates, each of N and M is a positive integer greater than 1, in a case where each of the N first electrode plates is a positive electrode plate and each of the M second electrode plates is a negative electrode plate, and a difference between M and N is 1; and
optionally, the separator includes a starting end and a terminate end, a first one of the M second electrode plates is closer to the starting end of the separator compared to a first one of the N first electrode plates, and a M-th one of the M second electrode plates is closer to the terminate end of the separator compared to a N-th one of the N first electrode plates.

In a second aspect, an embodiment of the present disclosure further provides a preparation method of a thermally-compositing laminated cell for preparing the thermally-compositing laminated cell in the embodiments described above, the preparation method includes following operations:
S10, providing a plurality of first electrode plates, a plurality of second electrode plates and a separator;
S20, thermally compositing the first electrode plates, the second electrode plates and the separator to form a composite laminate, wherein the first electrode plates are thermally composited on one side of the separator, the second electrode plates are thermally composited on another side of the separator, and the first electrode plates and the second electrode plates are disposed alternately and spaced apart along a length direction of the separator; processing incomplete-cut-off structures on the composite laminate, and each of the incomplete-cut-off structure is disposed on the separator between one of the first electrode plates and one of the second electrode plates adjacent to each other; and
S30, folding the composite laminate along a straight line where each of the incomplete-cut-off structure is located in a Z-shaped manner to form the thermally-compositing laminated cell.

In a third aspect, an embodiment of the present disclosure further provides a preparation method of a thermally-compositing laminated cell for preparing the thermally-compositing laminated cell in any one of the embodiments described above, the preparation method includes following operations:
S10, providing a plurality of first electrode plates, a plurality of second electrode plates, a first separator and a second separator;
S20, thermally compositing the first electrode plates, the second electrode plates, the first separator and the second separator to form a composite laminate, wherein the first electrode plates are spaced apart between the first separator and the second separator, the second electrode plates are alternately disposed on one side of the first separator away from the first electrode plates and one side of the second separator away from the first electrode plates, and a position of each of the second electrode plates is corresponded with a position of each of the first electrode plates; processing incomplete-cut-off structures on the composite laminate, and each of the incomplete-cut-off structures is disposed on the first separator between adjacent ones of the first electrode plates and/or on the second separator between adjacent ones of the first electrode plates;
S30, folding the composite laminate along a straight line where each of the incomplete-cut-off structure is located in a Z-shaped manner to form the thermally-compositing laminated cell.

Optionally, on the composite laminate, a distance between each of the incomplete-cut-off structures and each of two of the first electrode plates on two sides of the incomplete-cut-off structure is the same; or
optionally, on the composite laminate, a distance between each of the incomplete-cut-off structure and one of the first electrode plates adjacent thereto is S6, wherein, 2 mm≤S6≤4 mm; or
optionally, the composite laminate includes N first electrode plates and M second electrode plates, in a case where each of the first electrode plates is a negative electrode plate and each of the second electrode plate is a positive electrode plate, and a difference between N and M is 1, wherein a position of a i-th one of the M second electrode plates is corresponded with a position of a i-th one of the N first electrode plates, wherein i is a value of a positive integer from 1 to M; or
optionally, the composite laminate includes N first electrode plates and M second electrode plates, in a case where each of the first electrode plates is a positive electrode plate and each of the second electrode plate is a negative electrode plate, and a difference between M and N is 1, wherein a position of a i-th one of the M second electrode plates is corresponded with a position of a i-th one of the N first electrode plates, wherein i is a value of a positive integer from 1 to N.

The embodiments of the present disclosure provide a thermally-compositing laminated cell and a preparation method of a thermally-compositing laminated cell. The thermally-compositing laminated cell includes a plurality of first electrode plates, a plurality of second electrode plates and a separator. The separator includes body portions and bending portions. Adjacent body portions are connected by a bending portion. Each of the bending portions is provided with an incomplete-cut-off structure. Along the thickness direction of the first electrode plate, the first electrode plates and the second electrode plates are alternately stacked. The body portion is disposed on each of two sides of each of the first electrode plates. Adjacent first electrode plate and the second electrode plate are separated by the body portion, so as to avoid short circuiting caused by the electrical connection between the first electrode plate and the second electrode plate. The separator is not completely cut off, the separator can be folded continuously in a Z-shaped manner along the straight line where the incomplete-cut-off structure is located, and since the separator is folded along the straight line where the incomplete-cut-off is located every time, the folding position is fixed, so as to realize good alignment of the thermally-compositing laminated cell, and reduce the occurrence of lithium precipitation, thereby improving the electrical performance in terms of cycle life, fast charging capacity and safety of the laminated battery cell.

### BRIEF DESCRIPTION OF THE DRAWINGS

In order to explain the technical solutions in the embodiments of the present disclosure more clearly, the accompanying drawings needed in the description of the embodiments will be introduced briefly below. The accompanying drawings in the following description are only some embodiments of the present disclosure. For those skilled in the art, other accompanying drawings can be obtained based on these drawings without making creative efforts.

In order to have a better understanding of the present disclosure and the beneficial effects thereof, the following description will be made in conjunction with the accompanying drawings. In the following description, the same reference numerals represent the same portions.
FIG. 1 is a perspective view of a thermally-compositing laminated cell provided with a two-layered separator and negative electrode plates located between the two-layered separator according to some embodiments of the present disclosure.
FIG. 2 is a top view of FIG. 1.
FIG. 3 is a cross-sectional view along A-A in FIG. 2.
FIG. 4 is a partial enlarged view of B in FIG. 3.
FIG. 5 is a schematic cross-sectional view of a thermally-compositing laminated cell before being folded provided with a two-layered separator and negative electrode plates located between the two-layered of separator according to some embodiments of the present disclosure.
FIG. 6 is a perspective view of a thermally-compositing laminated cell provided with a two-layered separator and positive electrode plates located between the two-layered separator according to some embodiments of the present disclosure.
FIG. 7 is a cross-sectional view of a thermally-compositing laminated cell provided with a two-layered separator and positive electrode plates located between the two-layered separator according to some embodiments of the present disclosure.
FIG. 8 is a partial enlarged view of C in FIG. 7.
FIG. 9 is a schematic cross-sectional view of a thermally-compositing laminated cell before being folded provided with a two-layered separator and positive electrode plates located between the two-layered separator according to some embodiments of the present disclosure.
FIG. 10 is a top view of a thermally-compositing laminated cell before being folded according to some embodiments of the disclosure.
FIG. 11 is a schematic cross-sectional view of a thermally-compositing laminated cell before being folded provided with a two-layered separator according to some embodiments of the present disclosure.
FIG. 12 is a perspective view of a thermally-compositing laminated cell provided with a single-layered separator according to some embodiments of the present disclosure.
FIG. 13 is a schematic cross-sectional view of a thermally-compositing laminated cell provided with a single-layered separator according to some embodiments of the present disclosure.
FIG. 14 is a partial enlarged view of D in FIG. 13.
FIG. 15 is a schematic cross-sectional view of a thermally-compositing laminated cell provided with a two-layered separator before being folded according to some embodiments of the present disclosure.

### DETAILED DESCRIPTION

The technical solutions in the embodiments of the present disclosure will be clearly and completely described below with reference to the accompanying drawings in the embodiments of the present disclosure. It is apparent that the embodiments described herein are only some of the embodiments of the present disclosure, but are not all of the embodiments of the present disclosure. Based on the described embodiments, all other embodiments obtained by those skilled in the art without creative efforts will fall within the scope of protection of the present disclosure.

The thermally-compositing laminated cell according to the embodiments of the present disclosure will be described in detail below with reference to the accompanying drawings.

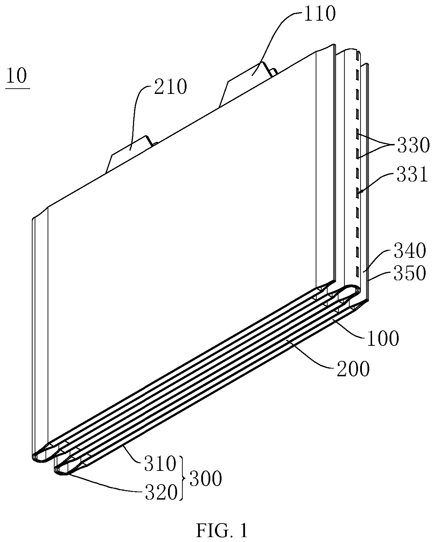

Referring to FIG. 1, FIG. 2 and FIG. 3, an embodiment of the present disclosure provides a thermally-compositing laminated cell 10 including a plurality of first electrode plates 100, a plurality of second electrode plates 200 and a separator 300. The cell can be used as the energy storage unit of the battery, the battery can convert the energy stored in the cell into current and supply it to electronic devices.

In some embodiments, the first electrode plates 100 and the second electrode plates 200 are cut from the first electrode plate coil and the second electrode plate coil respectively. The shape of each of the first electrode plate 100 and the second electrode plate 200 may be a rectangle. A first electrode tab 110 can be disposed on the first electrode plate 100, and a second electrode tab 210 can be disposed on the second electrode plate 200. At least a part of the structure of each of the first electrode tab 110 and the second electrode tab 210 can be located outside the separator 300. The polarity of the first electrode plate 100 is opposite to the polarity of the second electrode plate 200, the polarity of the first electrode tab 110 is the same as the polarity of the first electrode plate 100, and the polarity of the second electrode tab 210 is the same as the polarity of the second electrode plate 200. For example: the polarity of each of the first electrode tab 110 and the first electrode plate 100 is positive, and the polarity of each of the second electrode tab 210 and the second electrode plate 200 is negative; or the polarity of each of the first electrode tab 110 and the first electrode plate 100 is negative, and the polarity of each of the second electrode tab 210 and the second electrode plate 200 is positive.

Optionally, along the thickness direction of the first electrode plate, projections of first electrode tabs of the first electrode plates are overlapped with each other, and/or, projections of second electrode tabs of the second electrode plates are overlapped with each other.

Optionally, the projections of the first electrode tabs on a plane where the body portions are disposed side by side with the projections of the second electrode tabs on the plane where the body portions are located.

In some embodiments, as shown in FIG. 1, FIG. 2, and FIG. 3, along the thickness direction X of the first electrode plate 100, a projection of each of the first electrode plates 110 is overlapped with each other, and a projection of each of the second electrode plate 210 is overlapped with each other. The first electrodes tabs 110 are stacked along with the first electrode plates 100, and the second electrode tabs 210 are stacked along with the second electrode plates 200. Two adjacent electrode tabs 110 are spaced apart by the thickness of a body portion 310, and all the projections of the first electrode tabs 110 are in the same position. Two adjacent second electrode tabs 210 are spaced apart by the thickness of a body portion 310, and all the projections of the second electrode tabs 210 are in the same position. Therefore, it is convenient to weld all the first electrode tabs 110 as a whole, and weld all the second electrode tabs 210 as a whole, and the first electrode tabs 110 and the second electrode tabs 210 occupy less space.

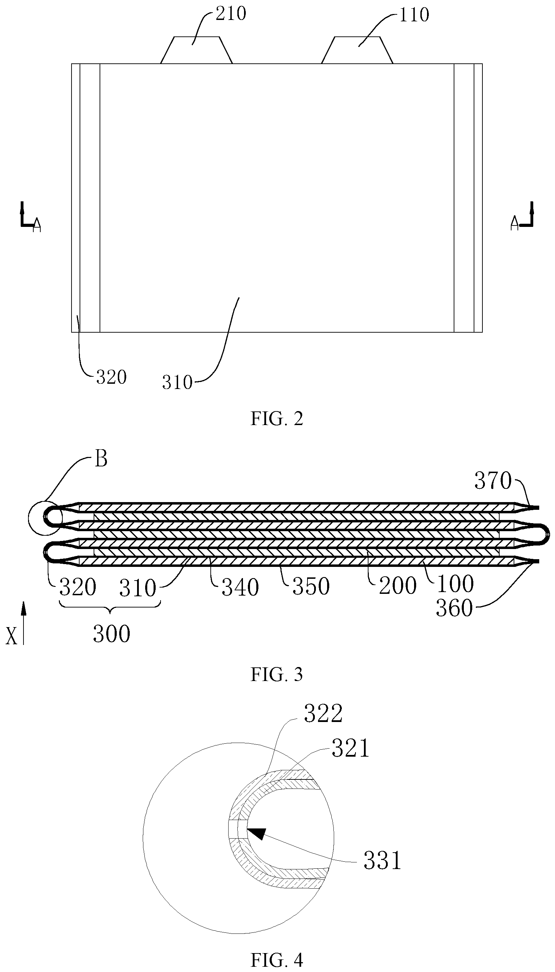

In some embodiments, as shown in FIG. 2, the projection of the first electrode tab 110 of the first electrode plate 100 on the plane where the body portion 310 is disposed side by side with the projection of the second electrode tab 210 of the second electrode plate 200 on the plane where the body portion 310 is located. The first electrode plate 100 and the second electrode plate 200 are respectively located on two sides of the body portion 310, the projection of the first electrode tab 110 of the first electrode plate 100 and the projection of the second electrode tab 210 of the second electrode plate 200 on the plane where the body portion 310 is located are spaced apart, so as to prevent interference between the first electrode tab 110 and the second electrode tab 210, thereby ensuring electrical safety.

In some embodiments, referring to FIG. 1, FIG. 2 and FIG. 3, the separator 300 is a continuous separator, the separator 300 includes a plurality of body portions 310 and a plurality of bending portions 320 that are alternately and continuously disposed. The plurality of body portions 310 are stacked along the thickness direction X of each of the first electrode plates 100. Adjacent two body portions 310 are connected by the bending portion 320. The bending portion 320 is provided with an incomplete-cut-off structure 330, and the separator 300 is bent at the incomplete-cut-off structure 330.

In some embodiments, referring to FIG. 3, along the thickness direction of the first electrode plate 100, the first electrode plates 100 and the second electrode plates 200 are alternately stacked, and one of the first electrode plates 100 and one of the second electrode plates 200 adjacent to each other are separated by one of the body portions 310. The projection of each of the first electrode plate 100 and the second electrode plate 200 along the thickness direction of the first electrode plate 100 completely fall within the planar area of the body portion 310 there between, so that the first electrode plate 100 and the second electrode plate 200 can be completely separated by the body portion 310, thereby preventing the first electrode plate 100 from contacting the second electrode plate 200 and causing short circuiting. The planar area of the body portion 310 is a continuous planar area surrounded by the outer contour of the projection of the body portion 310 along the thickness direction of the first electrode plate 100.

It can be understood that before being folded, the separator 300 has a continuous belt-like structure. The first electrode plates 100 and the second electrode plates 200 are composited on the body portions 310 of the separator 300 to form a compositing laminate. Incomplete-cut-off structures are disposed on the separator 330, the distances between each of the two side edges of the incomplete-cut-off structure 330 and the first electrode plate 100 located on the side where the side edge of the incomplete-cut-off structure is located are the same, and the compositing laminate is folded along the straight line where the incomplete-cut-off structure 330 is located. Therefore, the folding position is fixed, and the sizes between the folding positions are the same, which improve the alignment during the folding process, and avoid the occurrence of lithium precipitation that may pierce the separator 300 due to the misalignment of the first electrode plate 100 and the second electrode plate 200, thereby improving the electrical performance of the thermally-compositing laminated cell.

The first electrode plates 100 and the second electrode plates 200 being composited on the separator 300 means that the first electrode plates 100 and the second electrode plates 200 are fixed on the surface of the separator 300 through a thermal composite process. Exemplarily, the thermal composite process is as follows. The positive electrode coil, the negative electrode coil, and the separator are fed at the same time. Before entering the heating device, the positive electrode plates and the negative electrode plates are cut into single electrode plates with required sizes by a cutter. The combing body of the negative electrode plates 100, the positive electrode plates 200 and the separator enters the heating system under the action of rollers. The separator is a rubber-coated separator, which becomes sticky after being heated. After being baked, the positive electrode plates 200, the negative electrode plates 100 and the separator 300 are thermally composited, and then rolled and cut to form the composite laminate.

In some embodiments, as shown in FIG. 1, FIG. 2, FIG. 3, FIG. 4, FIG. 6, FIG. 7 and FIG. 8, there can be a plurality of separators 300, and the plurality of separators can be stacked along the thickness direction of the first electrode plate 100. Exemplarily, the cell can include two layers of separators, or can include more layers of separators. The embodiments of the present disclosure are described by taking a two-layered separator as an example. Other embodiments of multiple-layered separator can be adaptively designed based on the embodiments of the two-layered separator.

In some embodiments, as shown in FIG. 1, FIG. 3, FIG. 7 and FIG. 8, the two-layered separator 300 includes a first separator 340 and a second separator 350. Each of the first separator 340 and the second separator 350 includes body portions 310 and bending portions 320. Along the thickness direction X of the first electrode plate 100, the first electrode plates 100 and the second electrode plates 200 are stacked alternately, one of the first electrode plates 100 and one of the second electrode plates 200 adjacent to each other are separated by one of the body portions 310, and the bending portion 320 of the first separator 340 is provided with an incomplete-cut-off structure 330 and/or the bending portion 320 of the second separator 350 is provided with an incomplete-cut-off structure 330. Specifically, it includes the following situation: all incomplete-cut-off structures 330 are disposed on the first separator 340; or, all incomplete-cut-off structures 330 are disposed on the second separator 350; or, a part of the incomplete-cut-off structures 330 are disposed on the first separator 340, and the other part of the incomplete-cut-off structures 330 are disposed on the second separator 350; or, each of the first separator 340 and the second separator 350 is provided with incomplete-cut-off structures 330, and the number and position of the incomplete-cut-off structures 330 on the first separator 340 and the second separator 350 are the same.

Exemplarily, as shown in FIG. 1, FIG. 2, FIG. 3, FIG. 4, FIG. 6, FIG. 7 and FIG. 8, the cell may include a two-layered separator 300, that is, a first separator 340 and a second separator 350. The first separator 340 include first body portions 311 and first bending portions 321, and the second separator 350 includes second body portions 312 and second bending portions 322. A first electrode plate 100 is disposed between any two adjacent first body portion 311 and second body portion 312, and a second electrode plate 200 is disposed between any two adjacent first body portions 311 as well as between any two adjacent second body portions 312. Each of the first separator 340 and the second separator 350 is provided with incomplete-cut-off structures 330. The projection of the incomplete-cut-off structure 330 of the first separator 340 on the second separator 350 overlaps the continuous planar area surrounded by the outer contour of the incomplete-cut-off structure 330 of the second separator 350. When the separator 300 is folded, each of the first separator 340 and the second separator 350 is folded along the same straight line to ensure the alignment of the body portions 310 of each layer in the thermally-compositing laminated cell and improve the alignment of the thermally-compositing laminated cell.

Exemplarily, the first bending portion 321 and the second bending portion 322 can be connected in an attached manner. As long as a part of the structure of one of two bending portions is in contact with the other bending portion, the two bending portions can be considered to be connected in an attached manner. In some other embodiments, the first bending portion 321 and the second bending portion 322 may not be in contact, which is not limited in the embodiments of the present disclosure.

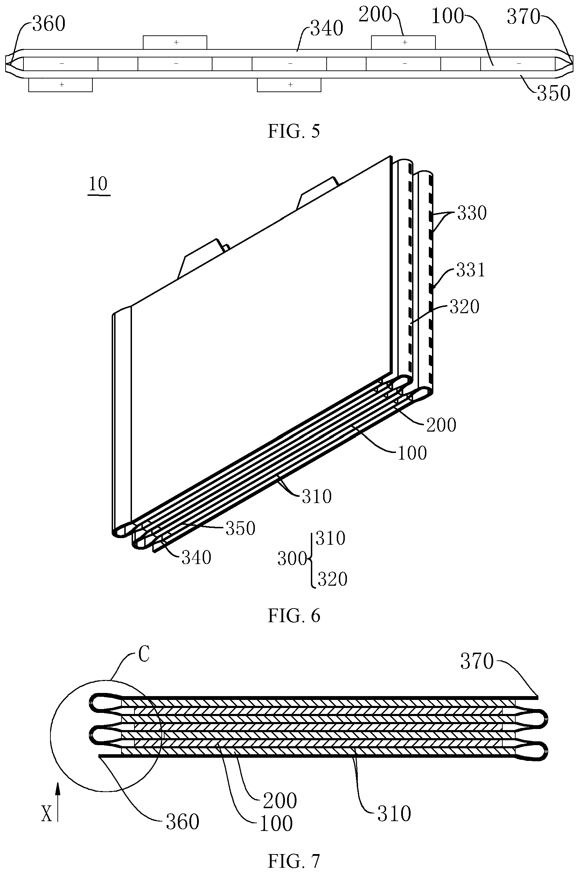

In some embodiments, as shown in FIG. 5, before being folded, each of the first separator 340 and the second separator 350 has a belt-like structure. The first electrode plates 100 are composited between the first separator 340 and the second separator 350. The second electrode plates 200 are composited on the side of the first separator 340 away from the first electrode plates 100 and the side of the second separator 350 away from the first electrode plates 100. The incomplete-cut-off structure 330 is located between two adjacent first electrode plates 100. The distances between each of two side edges of the incomplete-cut-off structure 330 and the first electrode plate 100 on the side where the side edge is located are the same, and the separator 300 (that is, the first separator 340 and the second separator 350) is folded at the incomplete-cut-off structure 330. The incomplete-cut-off structure 330 can release the stress generated by folding, so that the separator 300 can be easily folded at the incomplete-cut-off structure 330, thereby defining the folding position and improving the folding quality and folding efficiency.

In the embodiments of the present disclosure, by disposing the incomplete-cut-off structure, the folding position of the separator 300 can be defined, so that the separator 300 can be folded at substantially the same position to ensure the alignment of the first electrode plates 100 and the second electrode plates 200 in the thermally-compositing laminated cell, so as to avoid the occurrence of piercing of the separator 300 caused by lithium precipitation due to the misalignment of the first electrode plates 100 and the second electrode plates 200, and thereby improving the electrical performance of the thermally-compositing laminated cell in terms of service life, fast charging capacity, safety and other aspects.

In some embodiments, as shown in FIG. 1, FIG. 4, FIG. 6, FIG. 8, FIG. 9 and FIG. 10, the incomplete-cut-off structure 330 includes a plurality of through holes 331 penetrating the separator 300, and the plurality of through holes 331 are spaced apart along the width direction Z of the separator 300. Alternatively, the plurality of through holes 331 are arranged in an array, and the through holes 331 are arranged in multiple columns along the length direction Y of the separator 300. Each column of through holes 331 can be arranged along the width direction Z of the separator 300. Exemplarily, the arrangement directions of the multiple columns of through holes 331 may be parallel to each other. In some other embodiments, there may be an included angle formed between the arrangement direction of at least one column of through holes 331 and the arrangement direction of other columns of through holes. Exemplarily, the included angle may be less than or equal to 10°, for example, 1°, 2°, 5°, and the like. In some other embodiments, the included angle may be greater than 10°, which are not limited in the embodiments of the present disclosure. Exemplarily, multiple through holes 331 in one of any two columns of through holes 331 may be disposed in one-to-one correspondence with multiple through holes 331 in the other column of through holes. In some other embodiments, multiple through holes 331 of at least one column of through holes are disposed staggeredly with multiple through holes 331 of other columns of through holes. If the projections of the two through holes 331 in the length direction Y of the separator 300 do not overlap, it can be considered that the two through holes 331 are disposed staggeredly. For example, multiple through holes 331 in one of two adjacent columns of through holes 331 may be disposed staggeredly with the multiple through holes 331 in the other column of two adjacent columns of through holes.

In some other embodiments, the incomplete-cut-off structure 330 may also include a plurality of slits spaced apart from each other. The slit can be obtained by cutting the separator with a knife or the like. In addition, the incomplete-cut-off structure 330 may also be a meshed structure.

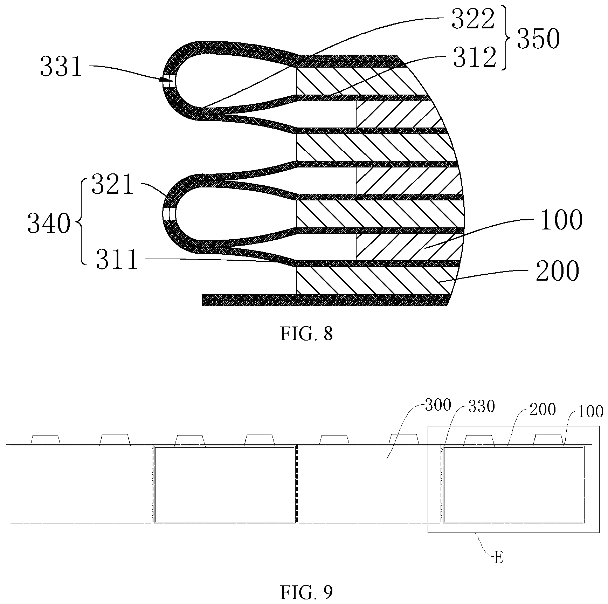

Referring to FIG. 8, when the separator 300 includes a first separator 340 and a second separator 350, the incomplete-cut-off structure 330 on the first separator 340 is the through holes 331 penetrating the first separator 340, and the incomplete-cut-off structure 330 on the second separator 350 is the through holes 331 penetrating the second separator 350. When each of the first separator 340 and the second separator 350 is provided with the incomplete-cut-off structure 330, the through holes 331 on the first separator 340 are disposed opposite to the through holes 331 on the second separator 350, and the through holes 331 on the first separator 340 and the through holes 331 on the second separator 350 penetrate the first separator and the second separator respectively.

It can be understood that by disposing a plurality of through holes 331 on the separator 300 to form the incomplete-cut-off structure 330, part of the materials on the separator 300 is cut off. Along the width direction Z of the separator 300, the separator 300 is not completely cut off, so that the separator 300 around the through holes 331 is weak. When being folded in free-falling manner, the separator 300 will be folded along the position where the through holes 331 are located, so as to achieve precise position folding, which is beneficial to the alignment of the first electrode plates 100 and the second electrode plates 200 in the thermally-compositing laminated cell.

In some embodiments, the distance between adjacent through holes 331 is the same, the distance between adjacent through holes 331 refers to the distance between one side edge of one through hole 331 and one side edge of the adjacent through hole 331 along the width direction Z of the separator 300.

In some embodiments, the distance between two adjacent through holes 331 is the same, which is beneficial to processing the through holes 331 on the separator 300, so that the strength of the separator 300 on the straight line where the multiple through holes 331 are located is the same, and thereby avoiding the situation that the separator is broken during the folding process due to weak strength at local areas.

In some embodiments, the shape of the through hole 331 is a regular shape such as a circle, a rectangle, an ellipse, a hexagon, or an octagon. In addition to the regular shape, the through hole 331 may also have an irregular shape.

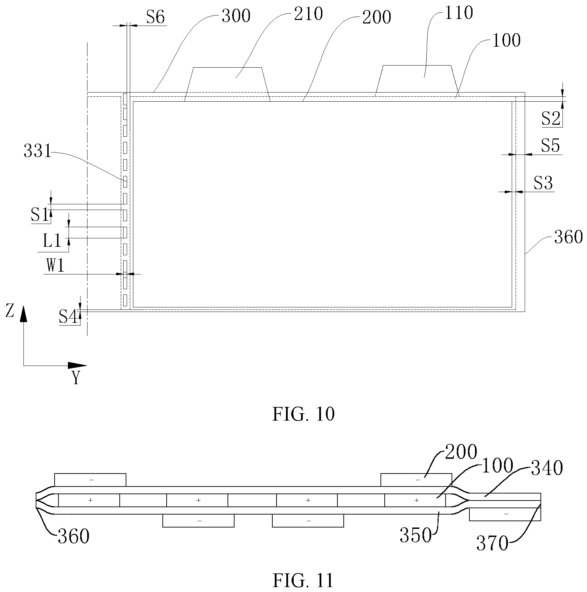

In some embodiments, as shown in FIG. 10, along the width direction Z of the separator 300, the distance between adjacent through holes 331 is S1, wherein 5 mm≤S1≤ 20mm. The value of S1 can be 5.0 mm, 5.2 mm, 5.7 mm, 7.8 mm, 9.0 mm, 10.5 mm, 11.5 mm, 12.3 mm, 13.9 mm, 14.0 mm, 15.7 mm, 16.1 mm, 17.4 mm, 18.0 mm, 19.6 mm, 20.0 mm or other values which are not explicitly specified herein.

In the embodiments of the present disclosure, the distance S1 between the through holes 331 is designed to be greater than or equal to 5 mm, so as to avoid the situation that the distance between the through holes 331 is too small and there are too many through holes 331, which affects the structural strength of the separator 300. The distance S1 between the through holes 331 is designed to be less than or equal to 20 mm, so as to avoid the situation that the distance between the through holes 331 is too large and the number of the through holes 331 is too small, which result in that the through holes cannot play the role of positioning the folding position. The distance between the through holes 331 is designed reasonably to ensure the folding quality.

In some embodiments, as shown in FIG. 10, the shape of the through hole 331 is a rectangle, and the through hole 331 has a first dimension L1 and a second dimension W1. The first dimension is the distance between two parallel planes that virtually abut against the hole walls at two sides of the through hole 331. The second dimension is the distance between two parallel planes that virtually abut against the hole walls at two ends of the through hole 331, wherein 1 mm ≤ L1 ≤ 20 mm, and/or 1 mm ≤ W1 ≤ 2 mm. The hole walls at two sides refer to the side walls extending along the width direction Z of the separator 300, and the hole walls at two ends refer to the side walls extending along the length direction Y of the separator 300. In some embodiments, the value of L1 can be 1.1 mm, 1.2 mm, 1.5 mm, 2.3 mm, 3.4 mm, 4.2 mm, 5.0 mm, 6.8 mm, 7.8 mm, 8.8 mm, 9.0 mm, 10.3 mm, 11.1 mm, 12.5 mm, 13.8 mm, 14.1 mm, 15.0 mm, 16.6 mm, 17.7 mm, 18.2 mm, 19.1 mm, 20.0 mm or other values which are not specifically listed herein. In some embodiments, the value of W1 can be 1.1 mm, 1.2 mm, 1.4 mm, 1.5 mm, 1.8 mm, 2.0 mm or other values which are not specifically listed herein.

It should be noted that the two parallel planes virtually abut against the through hole 331 are only introduced to facilitate the understanding of the first dimension and the second dimension, and do not actually exist in the solutions of the present disclosure. For example, the through hole 331 has a rectangular outer contour. In order to determine the first dimension and the second dimension, it can be assumed that two groups of planes are existed. Each group of planes includes two parallel planes that are spaced apart. The two parallel planes of each group can jointly and virtually abut against two opposite hole walls of the through hole 331. At this time, there is a distance between two parallel planes of each group, the first dimension is the distance between the two planes abutting against the hole walls at two sides of the through hole 331, and the second dimension is the distance between two planes abutting against the hole walls at two ends of the through hole 331.

It can be understood that the dimension of the through hole 331 in the embodiments is designed reasonably, so as to avoid the situation that the dimension of the through hole 331 is too large which affects the structural strength of the separator 300, or the dimension of the through hole 331 is too small which results in that the through hole cannot play a role of positioning the folding position during the folding process.

In some embodiments, the first electrode plate 100 is a negative electrode plate or a positive electrode plate, and the second electrode plate 200 is a positive electrode plate or a negative electrode plate.

Exemplarily, as shown in FIG. 1, FIG. 2, FIG. 3 and FIG. 4, if the first electrode plate 100 is a negative electrode plate, correspondingly, the second electrode plate 200 is a positive electrode plate. Referring to FIG. 6, FIG. 7 and FIG. 8, if the first electrode plate 100 is a positive electrode plate, correspondingly, the second electrode plate 200 is a negative electrode plate.

In some embodiments, as shown in FIG. 3, FIG. 7, and FIG. 10, the length dimension of the negative electrode plate is greater than the length dimension of the positive electrode plate, and the width dimension of the negative electrode plate is greater than the width dimension of the positive electrode plate. In the thermally-compositing laminated cell, along the thickness direction of the negative electrode plate, the projection of the positive electrode plate on the negative electrode plate completely falls within the negative electrode plate.

It can be understood that, as shown in FIG. 1, FIG. 2, FIG. 3 and FIG. 4, if the first electrode plate 100 is a negative electrode plate and the second electrode plate 200 is a positive electrode plate, then the length dimension of the first electrode plate 100 is greater than the length dimension of the second electrode plate 200, and the width dimension of the first electrode plate 100 is greater than the width dimension of the second electrode plate 200. Referring to FIG. 6, FIG. 7 and FIG. 8, if the first electrode plate 100 is a positive electrode plate and the second electrode plate 200 is a negative electrode plate, then the length dimension of the first electrode plate 100 is less than the length dimension of the second electrode plate 200, and the width dimension of the first electrode plate 100 is less than the width dimension of the second electrode plate 200. The dimension of the negative electrode plate is designed to be greater than the dimension of the positive electrode plate. During the charging process of the lithium battery, the negative electrode plate can completely receive the lithium ions from the positive electrode plate, so as to reduce the possibility of forming the lithium dendrite, thereby avoiding the occurrence of the situation that the formed lithium dendrite pierces the separator 300 which will result in short circuiting and cause thermal runaway, and improving the reliability of the battery.

In some embodiments, as shown in FIG. 10, the distance between the length side of the positive electrode plate and the length side of the negative electrode plate is S2, and 1 mm≤S2≤3 mm, and/or, the distance between the width side of the positive electrode plate and the width side of the negative electrode plate is S3, and 1 mm≤S3≤3 mm. Each of the values of S2 and S3 can be 1 mm, 1.3 mm, 1.7 mm, 1.8 mm, 2.0 mm, 2.3 mm, 2.7 mm, 3.0 mm or other values which are not specifically listed herein.

The distance S2 between the length side of the positive electrode plate and the length side of the negative electrode plate and the distance S3 between the width side of the positive electrode plate and the width side of the negative electrode plate may be the same or different, which is not specifically limited herein.

In the embodiments of the present disclosure, the distance S2 between the length side of the positive electrode plate and the length side of the negative electrode plate and the distance S3 between the width side of the positive electrode plate and the width side of the negative electrode plate are reasonably designed. While satisfying the battery safety performance, the size of the negative electrode plate exceeding the positive electrode plate can be appropriately shortened due to the good alignment of the thermally-compositing laminated cell, thereby reducing the material of the negative electrode plate and reducing costs.

In some embodiments, as shown in FIG. 10, the dimension of the length side of the body portion 310 is greater than the dimension of the length side of the negative electrode plate, and the dimension of the width side of the body portion 310 is greater than the dimension of the width side of the negative electrode plate. That is, the projection of the negative electrode plate on the body portion 310 completely falls within the continuous planar area surrounded by the outer contour of the body portion 310.

The negative electrode plate and the positive electrode plate are separated by the body portion 310. If the dimension of the body portion 310 is smaller than the dimension of the negative electrode plate, the negative electrode plate and the positive electrode plate may be in direct contact with each other, causing short circuiting and resulting in thermal runaway. By designing the dimension of the body portion 310 to be larger than the dimension of the positive electrode plate, the electrical safety requirements of the thermally-compositing laminated cell can be satisfied and the reliability of the thermally-compositing laminated cell can be improved.

In some embodiments, as shown in FIG. 10, the distance between the length side of the negative electrode plate and the length side of the separator 300 is S4, and 2 mm≤S4≤4 mm; and/or, the separator 300 includes a starting end 360, and the distance between the starting end 360 and the width side of the negative electrode plate closest to the starting end 360 is S5, and 1 mm ≤ S5 ≤ 3 mm. The length side of the negative electrode plate refers to the side extending along the direction Z, and the width side of the negative electrode plate refers to the side extending along the direction Y

In some embodiments, the value of S4 may be 2.1 mm, 2.3 mm, 2.7 mm, 3.0 mm, 3.4 mm, 3.8 mm, 3.9 mm, 4 mm or other values which are not specifically listed herein.

In some embodiments, the value of S5 may be 1.1 mm, 1.2 mm, 1.5 mm, 1.6 mm, 1.8 mm, 1.9 mm, 2 mm, 2.3 mm, 2.5 mm, 2.7 mm, 2.8 mm, 2.9 mm, 3 mm or other values which are not specifically listed herein.

In some embodiments, the value of each of S4 and S5 may be the same or different, which is not specifically limited in the embodiments.

It can be understood that the dimension of each of the negative electrode plate and the separator 300 is designed reasonably, while satisfying the electrical safety, material waste caused by the separator 300 being too large can be avoided, and processing costs can be reduced.

In some embodiments, as shown in FIG. 5, the thermally-compositing laminated cell includes N first electrode plates 100 and M second electrode plates 200, N and M are both positive integers greater than 1, and in the case wherein the first electrode plate 100 is a negative electrode plate and the second electrode plate 200 is a positive electrode plate, and a difference between N and M is 1.

It can be understood that the first electrode plates 100 and the second electrode plates 200 are disposed alternately, and the number of negative electrode plates is one more than the number of positive electrode plates, then two electrode plates located outermost of the thermally-compositing laminated cell are both negative electrode plates, so that the negative electrode plate can provide sufficient vacancies for the lithium ions extracted from the positive electrode plate to be intercalated. By providing excess negative electrode plates, the possibility of lithium dendrites forming on the electrode surface can be reduced, and the electrical requirements such as battery safety, capacity can be satisfied.

Based on the above embodiments, as shown in FIG. 5, the separator 300 includes a starting end 360 and a terminate end 370. The first one of the N first electrode plates 100 is closer to the starting end 360 of the separator 300 compared to the first one of the M second electrode plates 200, and the N-th one of the N first electrode plates 100 is closer to the terminate end 370 of the separator 300 compared to the M-th one of the M second electrode plates 200.

It can be understood that along the thickness direction of the first electrode plate 100, N first electrode plates 100 and M second electrode plates 200 are disposed alternately. Along the direction pointing from the bottom of the thermally-compositing laminated cell to the top of the thermally-compositing laminated cell, N first electrode plates 100 includes the first one of the N first electrode plates 100 to the N-th one of the N first electrode plates 100 in sequence, and M second electrode plates 200 includes the first one of the M second electrode plates 200 to the M-th one of the M second electrode plates 200 in sequence. The first one of the N first electrode plates 100 and the N-th one of the N first electrode plates 100 are respectively located at the bottom and the top of the thermally-compositing laminated cell. The separator 300 wraps the side of the first one of the N first electrode plates 100 away from the first one of the M second electrode plates 200, and the separator 300 wraps the side of the N-th one of the N first electrode plates 100 away from the M-th one of the M second electrode plates 200.

In some embodiments, as shown in FIG. 7, the thermally-compositing laminated cell includes N first electrode plates 100 and M second electrode plates 200, N and M are both positive integers greater than 1, and in the case wherein the first electrode plate 100 is a positive electrode plate and the second electrode plate 200 is a negative electrode plate, and a difference between M and N is 1.

It can be understood that the first electrode plates 100 and the second electrode plates 200 are disposed alternately, and the number of negative electrode plates is one more than the number of positive electrode plates, so that two electrode plates located outermost of the thermally-compositing laminated cell are both negative electrode plates, thereby satisfying the electrical requirements of the battery.

Based on the above embodiments, as shown in FIG. 7 and FIG. 8, the separator 300 includes a starting end 360 and a terminate end 370. The first one of the M second electrode plates 200 is closer to the starting end 360 of the separator 300 compared to the first one of the N first electrode plates 100, and the M-th one of the M second electrode plates 200 is closer to the terminate end 370 of the separator 300 compared to the N-th one of the N first electrode plates 100.

It can be understood that along the thickness direction of the first electrode plate 100, N first electrode plates 100 and M second electrode plates 200 are disposed alternately. Along the direction pointing from the bottom of the thermally-compositing laminated cell to the top of the thermally-compositing laminated cell, N first electrode plates 100 includes the first one of the N first electrode plates 100 to the N-th one of the N first electrode plates 100 in sequence, and M second electrode plates 200 includes the first one of the M second electrode plates 200 to the M-th one of the M second electrode plates 200 in sequence. The first one of the M second electrode plates 200 and the M-th one of the M second electrode plates 200 are respectively located at the bottom and the top of the thermally-compositing laminated cell. The separator 300 wraps the side of the first one of the M second electrode plates 200 away from the first one of the N first electrode plates 100, and the separator 300 wraps the side of the M-th one of the M second electrode plates 200 away from the N-th one of the N first electrode plates 100.

An embodiment of the present disclosure further provides a preparation method of a thermally-compositing laminated cell for preparing the thermally-compositing laminated cell 10 in any one of the embodiments described above, and the preparation method includes the following steps.

S10, providing a plurality of first electrode plates 100, a plurality of second electrode plates 200, a first separator 340 and a second separator 350.

S20, thermally compositing the first electrode plates 100, the second electrode plates 200, the first separator 340 and the second separator 350 to form a composite laminate, the plurality of first electrode plates 100 are spaced apart between the first separator 340 and the second separator 350, the second electrode plates 200 are alternately disposed on one side of the first separator 340 away from the first electrode plates 100 and one side of the second separator 350 away from the first electrode plates 100, and a position of each of the second electrode plates 200 is corresponded with a position of each of the first electrode plates 100; processing incomplete-cut-off structures 330 on the composite laminate, and each of the incomplete-cut-off structures 330 is disposed on the first separator 340 between adjacent ones of the first electrode plates 100 and/or on the second separator 350 between adjacent ones of the first electrode plates 100.

It can be understood that, as shown in FIG. 1, FIG. 3 and FIG. 5, when the first electrode plate 100 is a negative electrode plate, the corresponding second electrode plate 200 is a positive electrode plate, and the structure of the composite laminate formed by thermally compositing the first electrode plates 100 and the second electrode plates 200, the first separator 340 and the second separator 350 is shown in FIG. 5. Referring to FIG. 6, FIG. 7 and FIG. 11, when the first electrode plate 100 is a positive electrode plate, the corresponding second electrode plate 200 is a negative electrode plate, and the structure of the composite laminate formed by thermally compositing the first electrode plates 100 and the second electrode plates 200, the first separator 340 and the second separator 350 is shown in FIG. 11.

S30, folding the composite laminate along a straight line where each of the incomplete-cut-off structures 330 is located in a Z-shaped manner to form the thermally-compositing laminated cell 10.

It can be understood that in this embodiment, the firs separator 340, the second separator 350, the first electrode plates 100 and the second electrode plates 200 are thermally composited, and after the incomplete-cut-off structures 330 are processed on the first separator 340 and/or on the second separator 350, the composite laminate is then folded in a free-falling manner along the incomplete-cut-off structures 330. The positions of the first separator 340 and/or the second separator 350 where the incomplete-cut-off structures 330 are located are subject to small stress, so that the composite laminate is folded along the straight line where the incomplete-cut-off structure 330 is located in a Z-shaped manner, which improves the folding efficiency and folding quality, and ensures the alignment of the thermally-compositing laminated cell.

In some embodiments, as shown in FIG. 10, on the composite laminate, the distance between the incomplete-cut-off structure 330 and each of two first electrode plates 100 on two sides of the incomplete-cut-off structure is the same. The distance between the incomplete-cut-off structure 330 and each of two first electrode plates 100 on two sides of the incomplete-cut-off structure refers to the distance between the plane where the side edge of the incomplete-cut-off structure 330 is located and the side edge of the first electrode plate 100 at the side where the side edge of the incomplete-cut-off structure is located. On the composite laminate, the distance between adjacent first electrode plates 100 is the same, and the distance between the incomplete-cut-off structure 330 and the first plate 100 on each of two sides of the incomplete-cut-off structure is the same. Therefore, the folding position is determined, after the first electrode plates 100 are stacked, two side edges of all the first electrode plates 100 are aligned. Correspondingly, the second electrode plates 200 composited on the separator 300 on one side of the first electrode plates 100 are also aligned, and the second electrode plates 200 inevitably fall within the first electrode plates 100, thereby improving the alignment of the thermally-compositing laminated cell. It can be understood that the distance being the same in the embodiments includes that the distance is approximately the same and the distance is the same within the processing error range.

In some embodiments, as shown in FIG. 10, on the composite laminate, the distance between the incomplete-cut-off structure 330 and the adjacent first electrode plate 100 is S6, and 2.0 mm ≤ S6 ≤ 4.0 mm.

Exemplarily, the value of S6 may be 2.0 mm, 2.1 mm, 2.8 mm, 3.2 mm, 3.5 mm, 3.9 mm, 4.0 mm or other values which are not specifically listed herein. The parameter S5 is reasonably designed to ensure that the separator 300 can be folded along the incomplete-cut-off structure 330, so that the separator 300 can wrap the corresponding negative electrode plate, thereby ensuring the electrical safety of the cell.

In some embodiments, as shown in FIG. 5, the composite laminate includes N first electrode plates 100 and M second electrode plates 200. In the case where the first electrode plate 100 is a negative electrode plate and the second electrode plate 200 is a positive electrode plate, and a difference between N and M is 1. The separator 300 includes a starting end 360 and a terminate end 370. In the direction from the starting end 360 to the terminate end 370, the position of the i-th one of the M second electrode plates 200 is corresponded with the position of the i-th one of N first electrode plates 100, and i is a value of a positive integer from 1 to M. As shown in FIG. 5, in the direction from the starting end 360 to the terminate end 370, the N first electrode plates 100 includes the first one of the N first electrode plates 100, the second one of N first electrode plates 100 to the N-th one of N first electrode plates 100 in sequence, and the M second electrode plates 200 includes the first one of M second electrode plates 200, the second one of M second electrode plates 200 to the M-th one of M second electrode plates 200 in sequence. It can be seen that the N-th one of N first electrode plates 100 is not correspondingly provided with a second electrode plate 200.

In the embodiments of the present disclosure, as shown in FIG. 5, in the composite laminate, the first one of N first electrode plates 100 and the first one of M second electrode plates 200 are fixed, the second one of N first electrode plates 100 and the second one of M second electrode plates 200 are folded clockwise, the third one of N first electrode plates 100 and the third one of M second electrode plates 200 are folded counterclockwise, and by repeating the above Z-shaped folding process, the thermally-compositing laminated cell is prepared, so as to ensure that electrode plates at two outermost sides of the thermally-compositing laminated cell are negative electrode plates, thereby satisfying the electrical requirements and having a reasonably designed structure.

In some embodiments, as shown in FIG. 11, the composite laminate includes N first electrode plates 100 and M second electrode plates 200. In the case where the first electrode plate 100 is a positive electrode plate and the second electrode plate 200 is a negative electrode plate, and a difference between M and N is 1. The separator 300 includes a starting end 360 and a terminate end 370. In the direction from the starting end 360 to the terminate end 370, the position of the i-th one of the M second electrode plates 200 is corresponded with the position of the i-th one of N first electrode plates 100, and i is a value of a positive integer from 1 to N. As shown in FIG. 11, in the direction from the starting end 360 to the terminate end 370, the N first electrode plates 100 includes the first one of the N first electrode plates 100, the second one of N first electrode plates 100 to the N-th one of N first electrode plates 100 in sequence, and the M second electrode plates 200 includes the first one of M second electrode plates 200, the second one of M second electrode plates 200, and the M-th one of M second electrode plates 200 in sequence. It can be seen that the M-th one of M second electrode plates 200 is not correspondingly provided with a first electrode plate 100.

In the embodiments of the present disclosure, the first one of M second electrode plates 200 and the first one of N first electrode plates 100 that are close to the starting end 360 in the composite laminate are fixed, the second one of N first electrode plates 100 and the second one of M second electrode plates 200 are firstly folded clockwise, then the third one of N first electrode plates 100 and the third one of M second electrode plates 200 are folded counterclockwise, and by repeating the above Z-shaped folding process, the thermally-compositing laminated cell is prepared, so as to ensure that electrode plates at two outermost sides of the thermally-compositing laminated cell are negative electrode plates, thereby satisfying the electrical requirements and having a reasonably designed structure.

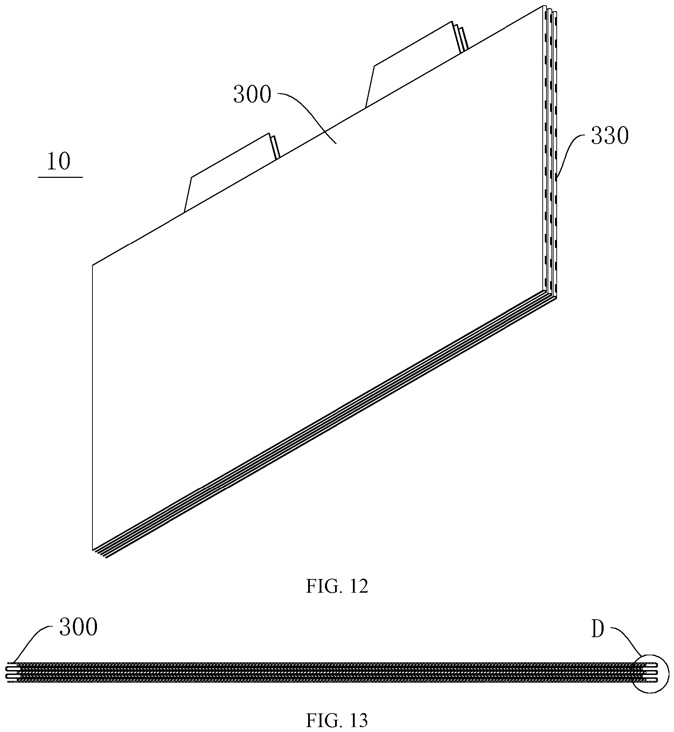

Referring to FIG. 12, FIG. 13 and FIG. 14, an embodiment of the present disclosure further provides a thermally-compositing laminated cell. The difference between this thermally-compositing laminated cell and the thermally-compositing laminated cell in other embodiments is that, the separator 300 in this embodiment is a single-layered separator. The separator 300 is provided with a plurality of body portions 310 and a plurality of bending portions 320. One side of the first electrode plate 100 is composited with one side of the separator 300, one side of the second electrode plate 200 is composited with the other side of the separator 300. The adjacent first electrode plate 100 and the second electrode plate 200 are separated by the body portion 310, and an incomplete-cut-off structure 330 is disposed on the bending portion 320.

An embodiment of the present disclosure further provides a preparation method of a thermally-compositing laminated cell for preparing the thermally-compositing laminated cell described above, and the preparation method includes the following steps.

S10, providing a plurality of first electrode plates 100, a plurality of second electrode plates 200 and a separator 300.

It can be understood that, for example, N first electrode plates 100 and M second electrode plates 200 are provided, and the first electrode plates 100 and the second electrode plates 200 are obtained by cutting the positive electrode coil and negative electrode coil. All the required first electrode plates 100 and the second electrode plates 200 can be cut during the preparing process, or the first electrode plates 100 and the second electrode plates 200 can be cut before they are thermally composited during the thermal composite process.

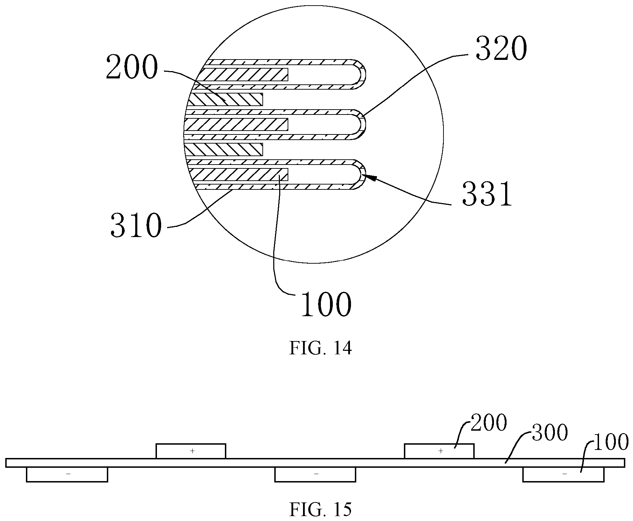

S20, thermally compositing the first electrode plates 100, the second electrode plates 200 and the separator 300 to form a composite laminate. For example, as shown in FIG. 15, the first electrode plates 100 are thermally composited on one side of the separator 300, and the second electrode plates 200 are thermally composited on the other side of the separator 300. The first electrode plates 100 and the second electrode plates 200 are disposed alternately and spaced apart along the length direction Y of the separator 300; processing incomplete-cut-off structures 330 on the composite laminate, and each of the incomplete-cut-off structures 330 is disposed on the separator 300 between one of the first electrode plates 100 and one of the second electrode plates 200 adjacent to each other.

It can be understood that, as shown in FIG. 15, the separator 300 is a single-layered separator, and the first electrode plates 100 and the second electrode plates 200 are thermally composited on the separator one by one. When the first electrode plate 100 is a negative electrode plate, the first one of the first electrode plates 100 is the first to be thermally composited on the separator 300, and the N-th one of the first electrode plates 100 is the last to be composited on the separator 300. All the first electrode plates 100 are located on one side of the separator 300, and all the second electrode plates 200 are located on the other side of the separator 300. In some embodiments, the incomplete-cut-off structures 330 can be processed uniformly on the separator 300 after the composite laminate is processed, or the incomplete-cut-off structure 330 can be processed on the separator 300 timely after single-one first electrode plate 100 or the single-one second electrode plate 200 is processed.

S30, folding the composite laminate along a straight line where each of the incomplete-cut-off structures 330 is located in a Z-shaped manner to form the thermally-compositing laminated cell. For example, the structure as shown in FIG. 12 and FIG. 14.

It can be understood that in this embodiment, the separator 300, the first electrode plates 100 and the second electrode plates 200 are thermally composited, and after the incomplete-cut-off structures 330 are processed on the separator 300, the composite laminate is then folded in a free-falling manner along the incomplete-cut-off structure 330. The positions of the separator 300 where the incomplete-cut-off structures 330 are located are subject to small stress, so that the composite laminate is folded along the straight line where the incomplete-cut-off structure 330 is located in a Z-shaped manner, thereby improving the folding efficiency and folding quality, and ensuring the alignment of the thermally-compositing laminated cell 10.

In the above embodiments, each embodiment is described with its own emphasis. For parts that are not described in detail in a certain embodiment, reference can be made to the relevant descriptions of other embodiments.

In the description of the present disclosure, terms such as "first" and "second" are merely used for descriptive purposes, and cannot be understood as indicating or implying relative importance or implicitly indicating the number of indicated technical features. Therefore, the features defined as the "first" and "second" may explicitly or implicitly include one or more features.

The thermally-compositing laminated cell and the preparation method of the thermally-compositing laminated cell provided by embodiments of the present disclosure have been introduced in detail above. Specific examples are used herein to illustrate the principles and implementations of the present disclosure, and the above description of the embodiments is merely intended to help understand the method and its core idea of the present disclosure. At the same time, for those skilled in the art, there will be changes in the specific implementations and application scope based on the ideas of the present disclosure. In summary, the content of the description should not be understood as a limitation of the present disclosure.

## Claims

1. A thermally-compositing laminated cell **characterized by** comprising:
a plurality of first electrode plates (100);
a plurality of second electrode plates (200), wherein a polarity of each of the first electrode plates (100) and a polarity of each of the second electrode plates (200) are opposite; and
a separator (300), wherein the separator (300) comprises a plurality of body portions (310) and a plurality of bending portions (320) disposed alternately and continuously;
wherein along a thickness direction of the first electrode plates (100), each of the first electrode plates (100) and each of the second electrode plates (200) are alternately stacked, one of the first electrode plates (100) and one of the second electrode plates (200) adjacent to each other are separated by one of the body portions (310), each of the bending portions (320) is provided with an incomplete-cut-off structure (330), and the separator (300) is folded at the incomplete-cut-off structure (330).

2. The thermally-compositing laminated cell according to claim 1, **characterized in that** the separator (300) comprises a first separator (340) and a second separator (350), wherein the first separator (340) comprises first body portions (311) and first bending portions (321), the second separator (350) comprises second body portions (312) and second bending portions (322), and each of the first bending portions (321) is provided with the incomplete-cut-off structure (330) and/or each of the second bending portions (322) is provided with the incomplete-cut-off structure (330).

3. The thermally-compositing laminated cell according to claim 2, **characterized in that** each of the first bending portions (321) and the second bending portions (322) is provided with the incomplete-cut-off structure (330), and a projection of the-incomplete-cut-off structure (330) of the first bending portion (321) on the second separator (350) overlaps the incomplete-cut-off structure (330) of the second bending portion (322).

4. The thermally-compositing laminated cell according to claim 2, **characterized in that** each of the first bending portions (321) and each of the second bending portions (322) are connected in an attached manner.

5. The thermally-compositing laminated cell according to any one of claims 1 to 4, **characterized in that** the incomplete-cut-off structure (330) includes a plurality of through holes (331) penetrating the separator (300), and the through holes (331) are spaced apart along a width direction of the separator (300).

6. The thermally-compositing laminated cell according to claim 5, **characterized in that** a distance between any adjacent two of the through holes (331) is the same; or
along the width direction of the separator (300), a distance between adjacent ones of the through holes (331) is S1, wherein 5 mm≤S1 ≤20 mm; or
each of the through holes (331) has a first dimension L1 and a second dimension W1, the first dimension is a distance between two parallel planes that virtually abut against hole walls at two sides of each of the through holes (331), and the second dimension is a distance between two parallel planes that virtually abut against hole walls at two ends of each of the through holes (331), wherein 1 mm≤L1≤20 mm, and/ or, 1 mm≤W1≤2 mm; or
a shape of each of the through holes (331) is a circle or a rectangle.

7. The thermally-compositing laminated cell according to claim 1, **characterized in that** each of the first electrode plates (100) is a negative electrode plate or a positive electrode plate, and each of the second electrode plates (200) is a positive electrode plate or a negative electrode plate.

8. The thermally-compositing laminated cell according to claim 7, **characterized in that** a dimension of a length side of the negative electrode plate is larger than a dimension of a length side of the positive electrode plate, and a dimension of a width side of the negative electrode plate is larger than a dimension of a width side of the positive electrode plate.

9. The thermally-compositing laminated cell according to claim 8, **characterized in that** a distance between the length side of the positive electrode plate and the length side of the negative electrode plate is S2, wherein 1 mm≤S2≤3 mm;
and/or, a distance between the width side of the positive electrode plate and the width side of the negative electrode plate is S3, wherein 1 mm≤S3≤3 mm; or
a dimension of a length side of each of the body portions (310) is larger than the dimension of the length side of the negative electrode plate, and a dimension of a width side of each of the body portions (310) is larger than the dimension of the width side of the negative electrode plate.

10. The thermally-compositing laminated cell according to claim 9, **characterized in that** a distance between the length side of the negative electrode plate and a length side of the separator (300) is S4, wherein 2 mm≤S4≤ 4 mm;
and/or, the separator (300) comprises a starting end (360), and a distance between the starting end (360) and a width side of one of negative electrode plates close to the starting end (360) is S5, wherein 1 mm≤S5≤3 mm.

11. The thermally-compositing laminated cell according to any one of claims 1 to 4, **characterized in that** the thermally-compositing laminated cell comprises N first electrode plates (100) and M second electrode plates (200), each of N and M is a positive integer greater than 1, in a case where each of the N first electrode plates (100) is a negative electrode plate and each of the M second electrode plates (200) is a positive electrode plate, and a difference between N and M is 1; and
the separator (300) comprises a starting end (360) and a terminate end (370), a first one of the N first electrode plates (100) is closer to the starting end (360) of the separator (300) compared to a first one of the M second electrode plates (200), and a N-th one of the N first electrode plates (100) is closer to the terminate end (370) of the separator (300) compared to a M-th one of the M second electrode plates (200).

12. The thermally-compositing laminated cell according to any one of claims 1 to 4, **characterized in that** the thermally-compositing laminated cell comprises N first electrode plates (100) and M second electrode plates (200), each of N and M is a positive integer greater than 1, in a case where each of the N first electrode plates (100) is a positive electrode plate and each of the M second electrode plates (200) is a negative electrode plate, and a difference between M and N is 1; and
the separator (300) comprises a starting end (360) and a terminate end (370), a first one of the M second electrode plates (200) is closer to the starting end (360) of the separator (300) compared to a first one of the N first electrode plates (100), and a M-th one of the M second electrode plates (200) is closer to the terminate end (370) of the separator (300) compared to a N-th one of the N first electrode plates (100).

13. A preparation method of a thermally-compositing laminated cell for preparing the thermally-compositing laminated cell according to claim 1, **characterized by** comprising following operations:
S10, providing a plurality of first electrode plates (100), a plurality of second electrode plates (200) and a separator (300);
S20, thermally compositing the first electrode plates (100), the second electrode plates (200) and the separator (300) to form a composite laminate, wherein the first electrode plates (100) are thermally composited on one side of the separator (300), the second electrode plates (200) are thermally composited on another side of the separator (300), and the first electrode plates (100) and the second electrode plates (200) are disposed alternately and spaced apart along a length direction of the separator (300); processing incomplete-cut-off structures (330) on the composite laminate, and each of the incomplete-cut-off structure (330) is disposed on the separator (300) between one of the first electrode plates (100) and one of the second electrode plates (200) adjacent to each other; and
S30, folding the composite laminate along a straight line where each of the incomplete-cut-off structure (330) is located in a Z-shaped manner to form the thermally-compositing laminated cell.

14. A preparation method of a thermally-compositing laminated cell for preparing the thermally-compositing laminated cell according to any one of claims 2 to 12, **characterized by** comprising following operations:
S10, providing a plurality of first electrode plates (100), a plurality of second electrode plates (200), a first separator (340) and a second separator (350);
S20, thermally compositing the first electrode plates (100), the second electrode plates (200), the first separator (340) and the second separator (350) to form a composite laminate, wherein the first electrode plates (100) are spaced apart between the first separator (340) and the second separator (350), the second electrode plates (200) are alternately disposed on one side of the first separator (340) away from the first electrode plates (100) and one side of the second separator (350) away from the first electrode plates (100), and a position of each of the second electrode plates (200) is corresponded with a position of each of the first electrode plates (100); processing incomplete-cut-off structures (330) on the composite laminate, and each of the incomplete-cut-off structures (330) is disposed on the first separator (340) between adjacent ones of the first electrode plates (100) and/or on the second separator (350) between adjacent ones of the first electrode plates (100);
S30, folding the composite laminate along a straight line where each of the incomplete-cut-off structure (330) is located in a Z-shaped manner to form the thermally-compositing laminated cell.

15. The preparation method of a thermally-compositing laminated cell according to claim 14, **characterized in that** on the composite laminate, a distance between each of the incomplete-cut-off structures (330) and each of two of the first electrode plates (100) on two sides of the incomplete-cut-off structure (330) is the same; or
on the composite laminate, a distance between each of the incomplete-cut-off structure (330) and one of the first electrode plates (100) adjacent thereto is S6, wherein, 2 mm≤S6≤4 mm; or
the composite laminate comprises N first electrode plates (100) and M second electrode plates (200), in a case where each of the first electrode plates (100) is a negative electrode plate and each of the second electrode plate (200) is a positive electrode plate, and a difference between N and M is 1, wherein a position of a i-th one of the M second electrode plates (200) is corresponded with a position of a i-th one of the N first electrode plates (100), wherein i is a value of a positive integer from 1 to M; or
the composite laminate comprises N first electrode plates (100) and M second electrode plates (200), in a case where each of the first electrode plates (100) is a positive electrode plate and each of the second electrode plate (200) is a negative electrode plate, and a difference between M and N is 1, wherein a position of a i-th one of the M second electrode plates (200) is corresponded with a position of a i-th one of the N first electrode plates (100), wherein i is a value of a positive integer from 1 to N.
